# FASCICULE DE BREVET EUROPEEN

(11) **EP 0 821 632 B1**
(45) Date de publication et mention de la délivrance du brevet: **13.01.1999**
(21) Numéro de dépôt: 96914249.6
(22) Date de dépôt: 26.04.1996
(51) Int. Cl.: B23Q 3/157

(54) **MECANISME D'ACCROCHAGE DE CASSETTES D'OUTILLAGE POUR UNITE D'USINAGE A COMMANDE NUMERIQUE**
FESTHÄNGUNG VON WERKZEUGKÖPFEN FÜR NUMERISCH GESTEUERTE ARBEITSSTATION
COUPLING MECHANISM FOR TOOLING CASSETTES IN A NUMERICAL CONTROL MACHINING UNIT

(30) Priorité: 28.04.1995 FR 9505130
(43) Date de publication de la demande: 04.02.1998
(73) Titulaire: RENAULT AUTOMATION, 92109 Boulogne Billancourt (FR)
(72) Inventeur: AZEMA, André, F-81710 Saix (FR)
(74) Mandataire: Richebourg, Michel François
(86) Numéro de dépôt international: FR9600641
(87) Numéro de publication internationale: WO9633840

(56) Documents cités:
- EP-A- 0 193 465
- DE-A- 2 753 801
- FR-A- 2 090 375
- US-A- 4 216 572
- PATENT ABSTRACTS OF JAPAN vol. 7, no. 24 (M-189), 29 Janvier 1983 & JP,A,57 178609 (FUJI SEIKI SEIZOUSHIYO)

## Description

La présente invention a trait au domaine de la machine-outil et concerne plus particulièrement une unité d'usinage à commande numérique pour machine-transfert.

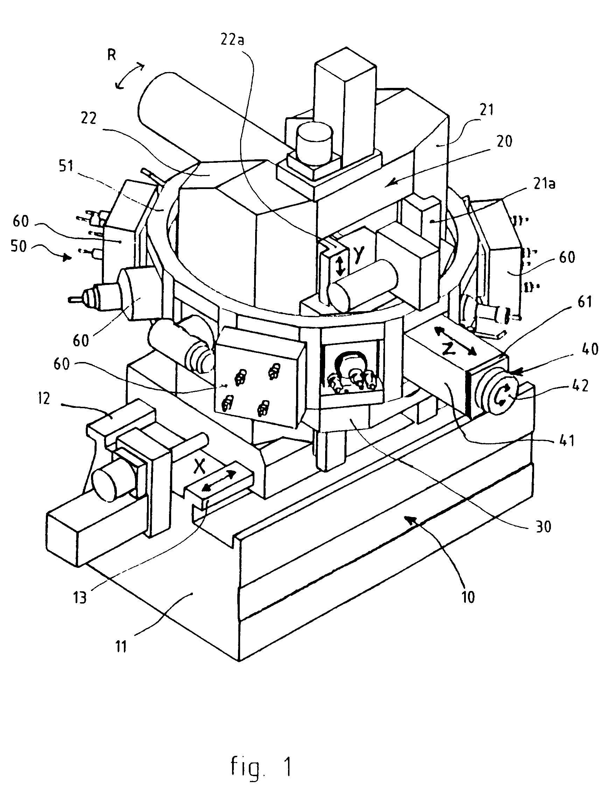

Dans sa demande de brevet EP-A-0 193 45, la demanderesse a proposé une unité d'usinage trois axes (X, Y, Z) à commande numérique pour machine-transfert selon le préambule de la revendication 1. Cette unité, telle qu'illustrée sur le dessin de la figure 1 par une vue en perspective, est constituée d'un bâti 10 se composant essentiellement d'un banc 11 agencé d'une paire de rails 12 et 13 autorisant, selon un mouvement horizontal illustré par la flèche X, un coulissement d'une console verticale 20 surmontant ledit banc 11. Cette console 20, du type monobloc à deux montants 21 et 22, est aménagée d'une paire de rails 21a et 22a sur lesquels coulisse, selon un mouvement vertical illustré par la flèche Y, une poupée 30, laquelle est traversée par un coulant porte-broche 40 évoluant selon un mouvement horizontal (flèche Z) normal au déplacement X. Un magasin 50 constitué d'une couronne 51 porteuse de cassettes d'outillages 60 est embarqué sur la poupée 30 tout en ceinturant la console 20. Dans le contexte de la présente invention, il faut entendre par "cassette", un boîtier contenant une cinématique développant l'entraînement d'une ou plusieurs broches d'usinage permettant de réaliser sur les pièces à usiner, des opérations variables comme :
- le fraisage d'une face par balayage pour des boîtes à vitesse,
- le fraisage par contournage pour des pompes à engrenages,
- le fraisage avec point de départ en escalier pour des culasses, des porte-fusées,
- le fraisage avec ébauche d'alésage,
- des alésages de précision à entr'axe précis,
- des détourages, des filetages intérieurs ou extérieurs,
- des trous variables en positions et en dimensions suivant les options,
   etc...

La couronne 51 du magasin 50 est montée rotative autour de la console 20 selon un mouvement de rotation illustré par la flèche R, de manière à pouvoir amener, en face de l'extrémité porteuse 41 du coulant 40, la cassette 60 sélectionnée en fonction du type de l'opération d'usinage à accomplir. Ensuite, la commande du déplacement Z du coulant 40 dont l'extrémité porteuse 41 est équipée pour recevoir et fixer la cassette 60 sélectionnée par la couronne 51, permet, au travers de cette dernière, de conduire directement ladite cassette sélectionnée 60 jusqu'à la pièce à usiner, évitant l'intervention d'un bras changeur d'outils. Afin d'assurer les opérations d'usinage sur ladite pièce, le coulant 40 incorpore un organe d'entraînement moteur 42 coopérant avec la cinématique de la cassette accrochée 60 pour assurer, au niveau de son extrémité porteuse 41, la mise en rotation (flèche r) des différentes broches équipant la cassette 60 accrochée.

Dans cette unité, la cassette 60 est notamment fixée à l'extrémité porteuse 41 du coulant 40, via une plaque porte-cassette 61 qui constitue également le moyen d'accrochage des cassettes 60 à la couronne 51 du magasin 50. La section droite de ces plaques 61 présente à cet effet des dimensions égales à celles de la section droite de l'extrémité porteuse 41 du coulant 40 permettant ainsi, à l'aide de plusieurs tirants parallèles à l'organe d'entraînement moteur 42, d'assurer le blocage d'une plaque 61 sur l'extrémité porteuse 41 du coulant 40.

Si la réalisation générale de l'unité d'usinage de sa demande de brevet EP-A-0 193 465 constitue un incontestable progrès par rapport au fonctionnement des machines du parc existant à l'époque, elle n'en comporte pas moins actuellement des possibilités d'amélioration, notamment au niveau du mécanisme qui anime le système d'accrochage des plaques porte-cassettes dont la complexité demeure un obstacle tant sur le coût de réalisation que sur son fonctionnement. En effet, les sources de défaillance de ce mécanisme n'en sont que plus nombreuses, d'autant que certaines pièces, s'agissant notamment des tirants, nécessitent des travaux de réglage, de contrôle et d'entretien importants, voire de remplacement, en raison de phénomènes d'usure importants. En outre, le risque encouru par un tel mécanisme est que la cassette, portée par l'extrémité porteuse du coulant considéré et agitée sous l'effet d'un jeu ou de l'usure, n'échappe de l'extrémité porteuse du coulant précipitant ainsi la chute de la cassette.

Partant de ces constatations et d'un cahier des charges préétablies, la demanderesse a donc mené des recherches visant à améliorer le mécanisme d'accrochage des cassettes en perfectionnant le guidage de ces dernières dans le magasin et en garantissant leur liaison avec le coulant lors des phases d'usinage des pièces et de prise et/ou de rangement des cassettes. Ces recherches ont abouti à un mode de réalisation originale d'un mécanisme d'accrochage des cassettes sur l'extrémité porteuse du coulant d'une unité d'usinage à commande numérique.

Pour développer l'objet de la présente invention et pour une meilleure compréhension de cette dernière, il est pris pour appui l'exemple de l'unité d'usinage trois axes telle que proposée dans la demande de brevet EP-A-0 193 465, mais il va de soi que le mécanisme d'accrochage proposé saura s'intégrer à toute autre machine-transfert de ce type et que ce soit avec deux axes ou un seul axe.

Un des premiers objets de l'invention permettant d'appliquer ce nouveau concept de mécanisme d'accrochage des cassettes, est de guider la couronne porteuse du magasin rotatif (flèche R) autour d'une piste circulaire fixe en rotation par rapport au bâti et préformée d'au moins une glissière dans laquelle sont retenus et guidés des éléments roulants associés aux cassettes. L'aménagement de cette piste circulaire pilotant la rotation R de la couronne a pour grand avantage de retenir et de guider dans la susdite glissière (fixe en rotation par rapport au bâti), les cassettes entraînées en rotation (flèche R) par la susdite couronne autour de la console. Cette correction de la rotation des cassettes par un élément fixe du bâti qu'est la glissière de la piste circulaire permet de peaufiner les opérations de repérage de celles-ci et de garantir leur maintien sur le magasin.

La présence de cette piste circulaire permet, selon les dispositions fondamentales de l'invention, de concevoir un secteur de glissière mobile disposé en face du susdit coulant porte-broche afin de pouvoir suivre les déplacements de ce dernier. De la sorte, le secteur de glissière mobile, dans lequel se logent également les éléments roulants de la cassette sélectionnée amenée devant le coulant, peut alors accompagner les évolutions de ce dernier qui entraîne, dans ses déplacements à travers la poupée et le magasin, la cassette et le secteur de glissière mobile embarqué par les éléments roulants de cette dernière.

Un autre objet de l'invention est d'associer le secteur de glissière mobile à l'extrémité d'un bras guidé en translation dans un support solidaire du bâti et destiné à accompagner les déplacements dudit secteur de glissière traîné par les éléments roulants de la cassette déplacée par le coulant porte-broche.

Un autre objet de l'invention est de pratiquer dans la face antérieure verticale des cassettes, opposée à la face des broches d'usinage et destinée à venir se présenter face à l'extrémité porteuse du coulant, au moins une rainure qui, adoptant de préférence une section en T s'étendant (en partie ou en totalité) sur la largeur des cassettes, est destinée à coopérer avec au moins un organe de préhension équipant l'extrémité porteuse du coulant. De la sorte, lorsque la rainure de la cassette sélectionnée se présente face à l'organe de préhension de l'extrémité porteuse du coulant, la rotation R de la cassette entraînée par la couronne du magasin fait introduire alors automatiquement ledit organe dans la rainure, et ce, avant que les organes roulants ne quittent la piste du magasin. En associant cet organe de préhension à un moyen simple de bridage à l'intérieur du T de la rainure, on obtient un mécanisme d'accrochage des cassettes sur le coulant, infaillible, de constitution simple et facile à mettre en oeuvre. De plus, si le moyen de bridage venait à être défectueux, l'organe de préhension peut définir à lui seul un élément de maintien de la cassette sur le coulant.

Bien que le concept général de l'invention ait été divulgué ci-dessus dans sa forme la plus élémentaire, de plus amples détails concernant un mode de réalisation préférée d'un mécanisme d'accrochage de cassettes sur le coulant d'une unité d'usinage à commande numérique, respectant les concepts fondamentaux de l'invention, seront mieux compris en se référant à la description ci-après et aux dessins l'accompagnant illustrant ce mode de réalisation.

Sur ces dessins :
Les figures 2 et 3 sont des vues en coupe du coulant 40 et du magasin 50 de l'unité d'usinage trois axes de la figure 1, intégrant le mécanisme d'accrochage selon l'invention.
La figure 4 est une vue en perspective éclatée des différents organes de ce mécanisme d'accrochage.
Les figures 5 et 6 sont des vues en perspective montrant le fonctionnement de ce mécanisme d'accrochage.

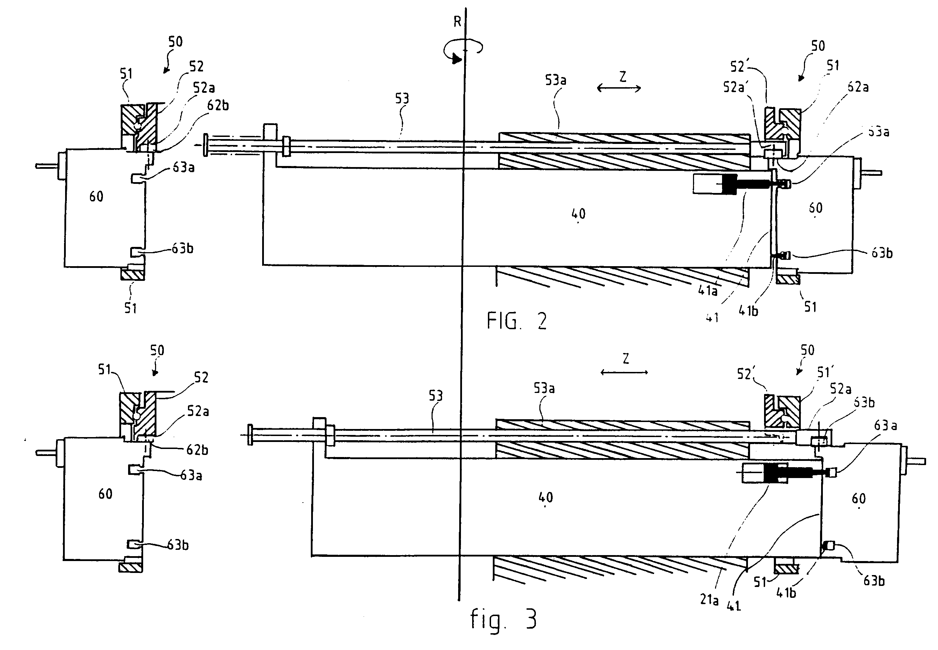

Les dessins des figures 2 et 3 illustrent le coulant 40, le magasin 50 et les cassettes d'outillages 60 de l'unité d'usinage trois axes à commande numérique telle que représentée sur le dessin de la figure 1 mais incorporant un nouveau mécanisme d'accrochage des cassettes 60 respectant les concepts fondamentaux de l'invention. Pour une meilleure compréhension de l'explication qui va suivre, la portion droite des dessins illustre le magasin 50 avec une cassette sélectionnée 60 et positionnée en face du coulant 40 alors que la portion gauche des dessins illustre une cassette 60 non sélectionnée et installée dans le magasin 50 dans une position diamétralement opposée à la première.

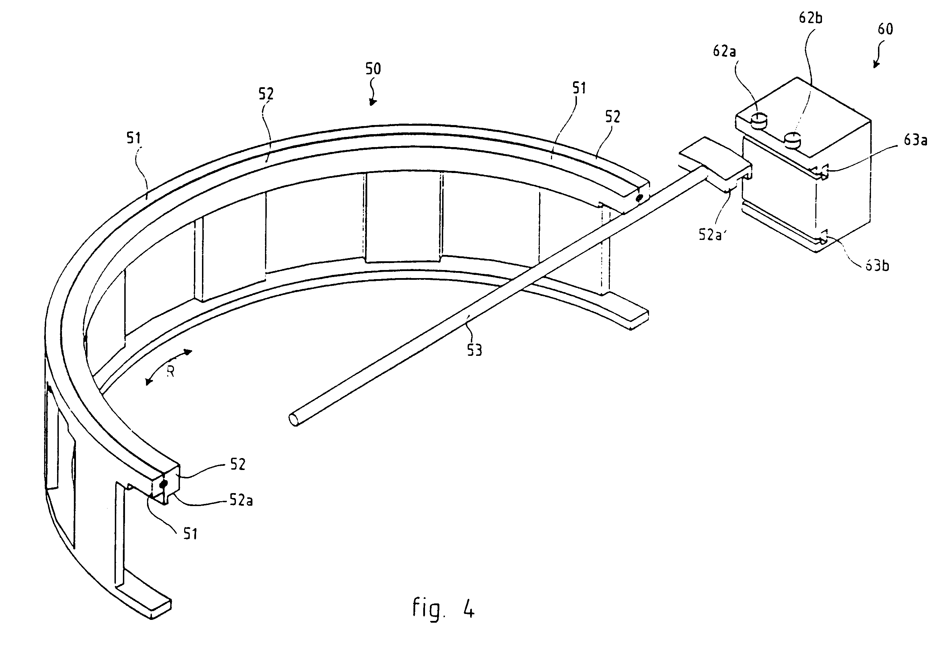

Suivant l'invention, la couronne 51 du magasin rotatif 50, retenant les cassettes 60, est guidée dans son mouvement de rotation (flèche R) autour d'une piste circulaire 52 associée au bâti 10 de la machine au niveau de la partie haute de la couronne 51. Comme on peut le voir plus en détails en se reportant à la portion gauche des dessins, la base de la piste 52 est aménagée d'une glissière 52a dessinée par une partie en équerre et dans laquelle peuvent coulisser et être retenus, des galets 62a et 62b disposés par paires sur la paroi supérieure des cassettes 60, tels qu'ils apparaissent sur le dessin de la figure 4. Cette glissière en équerre 52a définit un chemin de roulement pour les galets 62a et 62b des cassettes 60 lorsque la couronne 51 est entraînée en rotation (flèche R) autour de la piste circulaire 51.

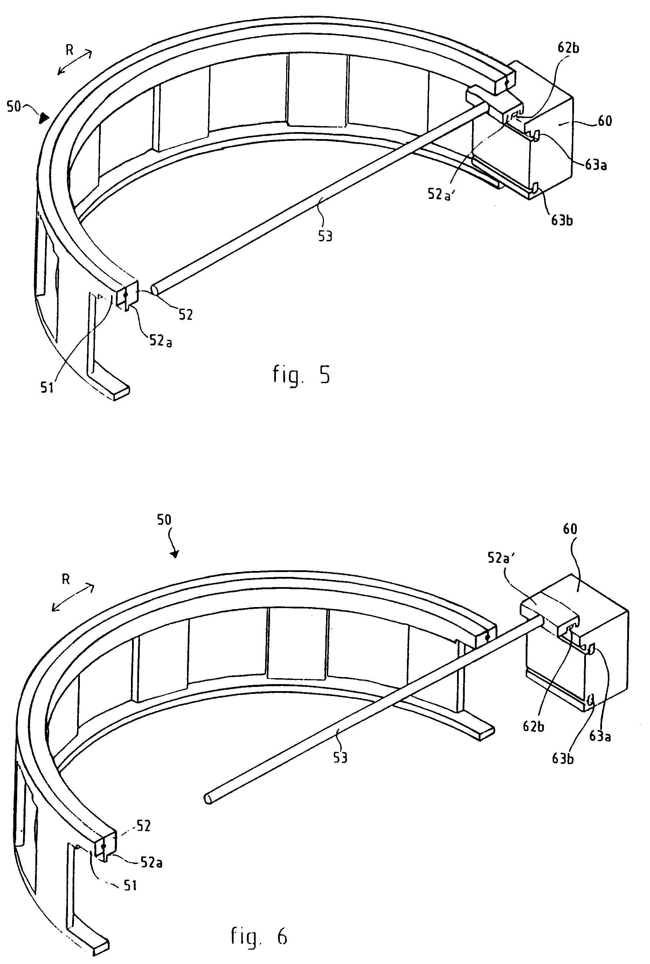

En se reportant à la portion droite des dessins des figures 3 et 4 et à l'ensemble des figures 4, 5 et 6, la piste circulaire 52 comporte dans sa portion située en face du coulant porte-broche 40, un secteur de glissière 52a' adoptant un profil en U renversé dans le prolongement du profil en équerre de la glissière fixe 52a et doté d'une mobilité lui permettant de suivre les déplacements (flèche Z) dudit coulant de telle sorte que lorsque la cassette sélectionnée 60 est accrochée à l'extrémité porteuse 41 du coulant 40, le secteur de glissière en U 52a' traîné par les galets 62a et 62b de la cassette 60 logés à l'intérieur, se détache de la piste 52' pour suivre le coulant, comme montré sur les dessins des figures 3 et 6. Afin d'assister les déplacements (flèche Z) du secteur de glissière mobile 52a', le secteur de glissière mobile 52a' est associé à l'extrémité d'un bras 53 guidé en translation (flèche Z) à l'intérieur d'un support 53a solidaire du bâti 10.

Les cassettes 60 comportent dans leur face antérieure verticale destinée à venir se présenter face à l'extrémité porteuse 41 du coulant 40, deux rainures parallèles 63a et 63b adoptant chacune une section en T et pratiquées sur une portion de la largeur desdites cassettes. Ces rainures 63a et 63b collaborent avec des organes appropriés de préhension 41a et 41b équipant l'extrémité porteuse 41 du coulant 40, de telle sorte que lorsque la cassette sélectionnée 60 amorce sa présentation en face de ladite extrémité porteuse 41, les organes de préhension 41a et 41b s'introduisent progressivement et automatiquement dans les rainures 63a et 63b sous l'effet de la rotation R de la cassette 60 qui finit de se présenter devant l'extrémité porteuse du coulant 40. Ces organes de préhension 41a et 41b sont associés à des moyens simples de bridage permettant de consolider l'accrochage de la cassette sélectionnée 60 au coulant 40. De cette façon, l'organe moteur d'entraînement 42 équipant l'extrémité porteuse 41 du coulant 40 (cf. figure 1) peut alors collaborer avec la cinématique du boîtier de la cassette 60, prête à assurer ses opérations d'usinage. Ces rainures 63a et 63b seront configurées sur la largeur des cassettes 60 de telle sorte qu'elles coopèrent avec le mouvement circulaire R des organes de préhension 41a et 41b. Ainsi, ces rainures adopteront une préforme curviligne ou seront tout au moins, pour des raisons de simplification de fabrication, réparties par secteurs sur la trajectoire circulaire desdits organes de préhension de manière à se trouver en face de ces derniers en position d'accrochage. De même, le profil en T de ces rainures sera aménagé de pans inclinés de meilleure répartition d'efforts des organes de préhension, qui seront judicieusement agencés par l'homme de métier.

On comprend que le mécanisme d'accrochage de cassettes, qui vient d'être ci-dessus décrit et représenté, l'a été en vue d'une divulgation plutôt que d'une limitation. Bien entendu, divers aménagements, modifications et améliorations pourront être apportés à l'exemple ci-dessus dans l'étendue des revendications.

Afin de permettre une meilleure compréhension des dessins, une liste des références avec leurs légendes est ci-après énumérée.
- 10: Bâti
- 11: Banc
- 12,13: Rails du banc 11
- 20: Console
- 21,22: Montants de la console 20
- 21a, 22a: Rails des montants 21,22
- 30: Poupée
- 40: Coulant
- 41: Extrémité porteuse du coulant 40
- 41a,41b: Organes de préhension
- 42: Organe moteur d'entraînement
- 50: Magasin
- 51: Couronne du magasin 50
- 52: Piste circulaire fixe
- 52a: Glissière en équerre fixe
- 52a': Secteur de glissière en U renversé mobile
- 53: Bras de guidage du secteur de glissière 52a'
- 53a: Support de guidage du bras 53
- 60: Cassettes d'outillages
- 61: Plaque porte-cassette
- 62a,62b: Galets roulants de maintien des cassettes
- 63a, 63b: Rainures en T des cassettes
- Flèche X: Mouvement de coulissement de la console 20
- Flèche Y: Mouvement de coulissement de la poupée 30
- Flèche Z: Mouvement de coulissement du coulant 40
- Flèche R: Mouvement de rotation de la couronne 51
- Flèche r: Mouvement de rotation de l'organe de commande porte-broche 42

## Revendications

1. Unité d'usinage à commode numérique pour machine-transfert du type de celle comprenant un bâti (10) sur lequel est monté un magasin (50) rotatif (flèche R) constitué d'une couronne (51) porteuse de cassettes d'outillages (60) et susceptible d'être traversée (flèche Z) par un coulant porte-broche (40) et dans laquelle la couronne (51) du susdit magasin rotatif (50) est guidée dans son mouvement de rotation (flèche R) autour d'une piste circulaire (52) fixe en rotation par rapport au bâti (10) et préformée pour accompagner également le mouvement de rotation (flèche R) des cassettes (60) entraînées autour de la susdite couronne (51), caractérisé par le fait que la piste circulaire (52) de guidage du magasin (50) porte une glissière (52a) dans laquelle sont retenus et guidés des galets guides (62a et 62b) associés aux cassettes d'outillage (60) et situés sur la paroi supérieure des cassettes (60) et que la glissière en équerre (52a) les guidant est pratiquée à la base de la piste circulaire (52) disposée à la partie haute du magasin (50).

2. Unité selon la revendication 1, caractérisé par le fait que la susdite piste circulaire (52) fixe en rotation par rapport au bâti (10) comporte, au niveau du susdit coulant porte-broche (40), un secteur de glissière (52a') doté d'une mobilité apte à lui permettre de suivre les déplacements (flèche Z) dudit coulant.

3. Unité selon la revendication 2, caractérisé par le fait que le susdit secteur de glissière mobile (52a') adopte un profil en forme de U renversé disposé dans le prolongement du profil en équerre de la susdite glissière fixe (52a).

4. Unité selon la revendication 2, caractérisé par le fait que le susdit secteur de glissière mobile (52a') est associé à un bras (53) animé en translation (flèche Z) dans un support (53a) solidaire du bâti (10), pour accompagner, avec le coulant porte-broche (40), les déplacements (flèche Z) dudit secteur de glissière mobile (52a') embarqué par les galets (62a et 62b) de la cassette (60) accrochée audit coulant (40).

5. Unité selon l'une quelconque des revendications 1 à 4, caractérisé par le fait que les susdites cassettes (60) comportent dans leur paroi antérieure verticale destinée à venir se présenter face à l'extrémité porteuse (41) du coulant porte-broche (40), au moins une rainure (63a ou 63b) pratiquée, en partie ou en totalité, sur la largeur des cassettes (60) pour coopérer avec un organe de préhension (41a ou 41b) équipant ladite extrémité porteuse (41) qui s'engage dans la susdite rainure (63a ou 63b) par coulissement sous l'effet de la rotation (flèche R) de la cassette.

6. Unité selon la revendication 5, caractérisé par le fait que le susdit organe de préhension (41a ou 41b) est assisté d'un moyen simple de bridage approprié à l'intérieur du profil de la rainure (63a ou 63b) pour conforter l'accrochage de la cassette (60) à la susdite extrémité porteuse.

7. Unité selon la revendication 5, caractérisé par le fait que la susdite rainure (63a ou 63b) des cassettes (60) adoptent une section en T avec des pans inclinés de répartition d'effort.

8. Unité selon la revendication 5, caractérisé par le fait que la susdite rainure (63a ou 63b) adopte une préforme curviligne reproduisant la trajectoire circulaire (flèche R) du susdit organe de préhension (41a et 41b).

9. Unité selon la revendication 5, caractérisé par le fait que la susdite rainure (63a ou 63b) est répartie par secteurs reproduisant la trajectoire circulaire (flèche R) du susdit organe de préhension (41a et 41b).

## Claims

1. A numerically controlled machining unit for a transfer machine of the type comprising a support (10) on which a magazine (50) is mounted rotatably (arrow R) formed by a ring (51) for carrying tool cassettes (60) and capable of being traversed (arrow Z) by a spindle-carrier slide (40) and in which the ring (51) of said rotary magazine (50) is guided in its rotary movement (arrow R) around a circular track (52) which is fixed in respect of rotary movement with respect to the support (10) and preformed for also accompanying the rotary movement (arrow R) of the cassettes (60) which are entrained around said ring (51), characterised in that the circular track (52) for guiding the magazine (50) carries a sliding guide (52a) in which there are retained and guided guide rollers (62a and 62b) which are associated with the tool cassettes (60) and disposed on the upper wall of the cassettes (60) and that the sliding guide (52a) of right-angled configuration for guiding them is provided at the base of the circular track (52) which is disposed at the top part of the magazine (50).

2. A unit according to claim 1 characterised in that said circular track (52) which is fixed in respect of rotary movement with respect to the support (10) comprises at the location of said spindle-carrier slide (40) a sliding guide sector (52a') enjoying a mobility such as to permit it to follow the displacements (arrow Z) of said slide.

3. A unit according to claim 2 characterised in that said movable sliding guide sector (52a') adopts a profile in the form of an inverted U-shape disposed in line with the profile of right-angle configuration of said fixed sliding guide (52a).

4. A unit according to claim 2 characterised in that said movable sliding guide sector (52a') is associated with an arm (53) movable with a translatory movement (arrow Z) in a carrier (53a) which is fixed with respect to the support (10) to accompany, with the spindle-carrier slide (40), the displacements (arrow Z) of said movable sliding guide sector (52a') which is carried by the rollers (62a and 62b) of the cassette (60) which is coupled to the slide (40).

5. A unit according to any one of claims 1 to 4 characterised in that in their vertical front wall intended to come into facing relationship with the carrier end (41) of the spindle-carrier slide (40) said cassettes (60) comprise at least one groove (63a or 63b) which is provided in part or entirely over the width of the cassettes (60) to co-operate with a gripping member (41a or 41b) equipping said carrier end (41) which engages into said groove (63a or 63b) by a sliding action under the effect of the rotary movement (arrow R) of the cassette.

6. A unit according to claim 5 characterised in that said gripping member (41a or 41b) is assisted by a simple suitable fastening means in the interior of the profile of the groove (63a or 63b) to strengthen the coupling of the cassette (60) to said carrier end.

7. A unit according to claim 5 characterised in that said groove (63a or 63b) of the cassettes (60) adopts a T-shaped section with inclined surface-distributing surface portions.

8. A unit according to claim 5 characterised in that said groove (63a or 63b) adopts a curved preliminary shape reproducing the circular path of movement (arrow R) of said gripping member (41a and 41b).

9. A unit according to claim 5 characterised in that said groove (63a or 63b) is distributed in sectors reproducing the circular path of movement (arrow R) of said gripping member (41a and 41b).

## Patentansprüche

1. Bearbeitungseinheit mit numerischer Steuerung für eine Transfermaschine des Typs, der einen Rahmen (10) aufweist, auf dem ein drehbares (Pfeil R) Magazin (50) montiert ist, das durch einen Kranz (51) gebildet wird, der Gerätekassetten (60) trägt und von einem Spindelträger-Schieber (40) durchquert (Pfeil Z) werden kann, wobei der Kranz (51) des obengenannten drehbaren Magazins (50) in seiner Rotationsbewegung (Pfeil R) um eine kreisförmige Spur (52) geführt wird, die in Bezug auf den Rahmen (10) nicht drehbar vorgesehen ist und so vorgeformt ist, um auch die Drehbewegung (Pfeil R) der Kassetten (60) zu begleiten, die um den obengenannten Kranz (51) herum bewegt werden,
dadurch gekennzeichnet, daß die kreisförmige Spur (52) zur Führung des Magazins (50) eine Gleitschiene (52a) aufweist, in der Führungsrollen (62a und 62b) gehalten und geführt werden, die mit den Gerätekassetten (60) verbunden sind und sich an der oberen Wand der Kassetten (60) befinden, und daß die winkelförmige Gleitschiene (52a), die sie führt, an der Basis der kreisförmigen Spur (52) gebildet ist, die am oberen Teil des Magazins (50) vorgesehen ist.

2. Einheit nach Anspruch 1, dadurch gekennzeichnet, daß die obengenannte kreisförmige Spur (52), die in Bezug auf den Rahmen (10) nicht drehbar vorgesehen ist, auf der Höhe des obengenannten Spindelträger-Schiebers (40), einen Gleitschienenabschnitt (52a') aufweist, der mit einer Beweglichkeit versehen ist, die es ihm ermöglicht, den Bewegungen (Pfeil Z) des obengenannten Schiebers zu folgen.

3. Einheit nach Anspruch 2, dadurch gekennzeichnet, daß der obengenannte bewegliche Gleitschienenabschnitt (52a') ein Profil in der Form eines umgekehrten U aufweist, das in der Verlängerung des winkelförmigen Profils der obengenannten fixen Gleitschiene (52a) angeordnet ist.

4. Einheit nach Anspruch 2, dadurch gekennzeichnet, daß der obengenannte bewegliche Gleitschienenabschnitt (52a') mit einem Arm (53) verbunden ist, der in einer fest mit dem Rahmen (10) verbundenen Auflage (53a) eine Translationsbewegung (Pfeil Z) ausführt, um mit dem Spindelträger-Schieber (40) die Bewegungen (Pfeil Z) des obengenannten mobilen Gleitschienenabschnitts (52a') zu begleiten, in dem sich die Rollen (62a und 62b) der Kassette (60) befinden, die am genannten Schieber (40) befestigt ist.

5. Einheit nach einem der Ansprüche 1 bis 4, dadurch gekennzeichnet, daß die obengenannten Kassetten (60) in ihrer vorderen vertikalen Wand, die dazu bestimmt ist, vor dem tragenden Ende (41) des Spindelträger-Schiebers (40) zu erscheinen, zumindest eine Rille (63a oder 63b) aufweisen, die teilweise oder ganz über die Breite der Kassetten (60) gebildet ist, um mit einem Greiforgan (41a oder 41b) zusammenzuarbeiten, das an dem genannten tragenden Ende (41) vorgesehen ist und das durch die Wirkung der Drehbewegung (Pfeil R) der Kassette gleitend in die obengenannte Rille (63a oder 63b) eingreift.

6. Einheit nach Anspruch 5, dadurch gekennzeichnet, daß das obengenannte Greiforgan (41a oder 41b) durch ein einfaches, geeignetes Flanschverbindungsmittel im Inneren des Profils der Rille (63a oder 63b) unterstützt wird, um die Befestigung der Kassette (60) an dem obengenannten tragenden Ende zu verstärken.

7. Einheit nach Anspruch 5, dadurch gekennzeichnet, daß die obengenannte Rille (63a oder 63b) der Kassetten (60) einen T-förmigen Querschnitt mit geneigten Flächen zur Kraftverteilung aufweist.

8. Einheit nach Anspruch 5, dadurch gekennzeichnet, daß die obengenannte Rille (63a oder 63b) gekrümmt vorgeformt ist, so daß die kreisförmige Bahn (Pfeil R) des obengenannten Greiforgans (41a und 41b) reproduziert wird.

9. Einheit nach Anspruch 5, dadurch gekennzeichnet, daß die obengenannte Rille (63a oder 63b) sektorenweise verteilt ist, so daß die kreisförmige Bahn (Pfeil R) des obengenannten Greiforgans (41a und 41b) reproduziert wird.
